(19) Europäisches Patentamt
European Patent Office
Office européen des brevets

(11) **EP 2 094 065 B1**

(12) **EUROPÄISCHE PATENTSCHRIFT**

(45) Veröffentlichungstag und Bekanntmachung des Hinweises auf die Patenterteilung:
**21.04.2010  Patentblatt 2010/16**

(51) Int Cl.:
*H05B 41/392* *(2006.01)*  *H05B 39/04* *(2006.01)*
*H02M 5/293* *(2006.01)*

(21) Anmeldenummer: **08019738.7**

(22) Anmeldetag: **12.11.2008**

(54) **Verfahren zur Lichtstromsteuerung von gedimmten Leuchtmitteln sowie Schaltungsanordnung dafür**

Method for controlling the lightoutput from dimmed bulbs and switching arrangement for carrying out this method

Procédé destiné à la commande de flux lumineux de moyens d'éclairage réglables en intensité et agencement de commutation correspondant

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **20.02.2008  DE 102008010251**

(43) Veröffentlichungstag der Anmeldung:
**26.08.2009  Patentblatt 2009/35**

(73) Patentinhaber: **Insta Elektro GmbH
58511 Lüdenscheid (DE)**

(72) Erfinder:
• **Getjegerdes, Stefan
26349 Jaderberg (DE)**
• **Krause, Karl-Heinz, Dipl.-Ing.
58809 Neuenrade (DE)**
• **Burgholte, Alwin
26389 Wilhelmshaven (DE)**

(56) Entgegenhaltungen:
**EP-A1- 1 135 007      WO-A2-2007/006851
DE-A1- 4 406 371      US-A1- 2005 275 354**

**Beschreibung**

Die Erfindung betrifft ein Verfahren zur Steuerung eines bezüglich seines abzugebenden Lichtstroms einstellbaren, an einen einen Halbleiterschalter aufweisenden Dimmer angeschlossenen Leuchtmittels. Ferner betrifft die Erfindung eine Schaltungsanordnung zum Steuern des Lichtstroms eines bezüglich seines abzugebenden Lichtstroms einstellbaren, an einen einen Halbleiterschalter aufweisenden Dimmer angeschlossenen Leuchtmittels.

Leuchtmittel, die an einen einen Halbleiterschalter aufweisenden Dimmer angeschlossen sind und bezüglich ihres Lichtstroms (Helligkeit pro Zeit über alle Lichtfrequenzen) durch den Dimmer einstellbar sind, unterliegen Lichtstromschwankungen (Flickern), wenn die Netzfrequenz von z. B. 50 Hz durch Störfrequenzen überlagert ist. Der Flickereffekt tritt dann auf, wenn der Netzspannungspegel mit einer zwischen-harmonischen Frequenzen (Rundsteuersignal) überlagert ist, welche um einige Herz von den ungradzahligen Vielfachen der Netzfrequenz abweicht. Die Konzeption der Phasenan- und Phasenabschnittdimmer bedingt, dass im Prinzip die Netzspannung mit einer Rechteckfunktion der gleichen Grundfrequenz wie die Netzfrequenz multipliziert wird. Eine solche Rechteckfunktion besteht im Frequenzbereich aus der Grundschwingung und den ungradzahligen Oberschwingungen. Die Multiplikation dieser Oberschwingungen mit der zwischen-harmonischen Frequenz ruft hier Schwebungserscheinungen vor, welche sich von der Frequenz her im sichtbaren Bereich befinden können. Ursache derartiger Störfrequenzen sind u. a. von den Netzbetreibern generierte Rundsteuersignale, mit denen bei Verbrauchern installierte Geräte angesteuert werden sollen. Das Rundsteuersignal wird der Netzfrequenz überlagert. Zwischenharmonische Frequenzen, die auf elektronische Dimmer dieselbe Wirkung haben wie Rundsteuersignale, werden u.a. auch durch Wechselrichter in das Netz eingespeist.

Elektronische Dimmer arbeiten in der Regel nach dem Phasenanschnittprinzip oder nach dem Phasenabschnittprinzip. Beim Phasenanschnittprinzip sperrt der Halbleiterschalter des Dimmers den Stromfluss zum Leuchtmittel zu Beginn einer jeden Sinushalbwelle. Erst nach Ablauf einer durch den Anwender einstellbaren Zeit (Dimmwert) wird der Halbleiterschalter im Dimmer durchgeschaltet und das oder die daran angeschlossenen Leuchtmittel werden bestromt. Mit dem auf das Einschalten folgenden Stromnulldurchgang wird der Stromfluss gelöscht und der Halbleiterschalter in seine Sperrstellung gebracht, wodurch das oder die daran angeschlossenen Leuchtmittel abgeschaltet werden. Dieses erfolgt in jeder Sinushalbwelle bei einer Netzfrequenz 50 Hz 100 Mal in der Sekunde. Durch Variieren der Verzögerungszeit ausgehend von einem Sinusnullpunkt (Nulldurchgang) bis zum Zünden des Halbleiterschalters lässt sich die Helligkeit des Leuchtmittels stufenlos einstellen. Im Unterschied hierzu werden das oder die Leuchtmittel bei einem Phasenabschnittdimmer im Nulldurchgang der Spannungs-Sinushalbwelle eingeschaltet und nach einer durch den Anwender einstellbaren Zeit durch entsprechendes Ansteuern des Halbleiterschalters wieder abgeschaltet. Auch bei diesen Dimmern kann durch Variieren des Abschaltzeitpunktes der Lichtstrom des angeschlossenen Leuchtmittels stufenlos eingestellt werden. Mit Hilfe der vorbeschriebenen Anschnitt- bzw. Abschnittsteuerung wird somit der Effektivwert der am Leuchtmittel anliegenden Spannung verändert.

Während bei Dreidrahtdimmern (Dimmer mit Neutralleiteranschluss) eine Eliminierung des Flickern dadurch möglich ist, dass die Spannung über der Last erfasst werden kann, ist dieses bei Zweidrahtdimmern (Dimmer ohne Neutralleiteranschluss) nicht möglich, da Dimmer und Last in Reihe geschaltet sind. Zur Vermeidung bzw. zumindest zur Reduzierung eines Flickerns bei Zweidrahtdimmern sind unterschiedliche Vorschläge gemacht worden. In DE 44 41 733 A1 ist zu diesem Zweck beispielsweise ein Filterglied beschrieben, bestehend aus einem Siebglied, einem mehrstufigen Filter und einem Fensterdiskriminator, mit dem die Störeinflüsse im Netz negiert werden, und zwar durch geeignete Verschiebung des Schaltzeitpunktes. Nachteilig ist bei derartigen Schaltungsanordnungen, dass diese nur in demjenigen Frequenzbereich zufriedenstellend arbeiten, für den das oder die eingesetzten Filter ausgelegt sind. Die Bandbreite von Störfrequenzen nimmt allerdings zu, so dass Dimmer mit derartigen Flickereffekt-Korrekturmaßnahmen insbesondere in Bereichen, in denen Störfrequenzen in einem größerem Spektrum auftreten, nicht immer zufriedenstellend eingesetzt werden können.

Aus DE 44 06 371 B4 ist ein weiteres Verfahren zum Reduzieren des vorbeschriebenen Flickereffektes bekannt geworden. Bei dem in diesem Dokument beschriebenen Verfahren wird eine Energiebetrachtung über die Erfassung des Laststromes durchgeführt. Mit Hilfe einer geeigneten Quadrierschaltung werden die Einschaltzeiten als Phasenabschnittdimmer konzipierten Dimmers vorgegeben.

Dem in diesem Dokument beschriebenen Verfahren liegt der Gedanke zugrunde, die Störanteile halbwellenbezogen zu unterdrücken. Außerdem wertet diese bei durchgeschaltetem Halbleiterschalter die Sinushalbwelle aus und passt im Hinblick auf das Vorhandensein von Störanteilen den Schaltzeitpunkt an. Dieses Verfahren kann allerdings nur bei einer Abschnittsteuerung realisiert werden. Dieses Verfahren arbeitet nicht prädiktiv.

Ausgehend von diesem diskutierten Stand der Technik liegt der Erfindung die Aufgabe zu Grunde, ein eingangs genanntes Verfahren sowie eine eingangs genannte Schaltungsanordnung dergestalt weiterzubilden, dass mit diesen ein besserer flickerfreier Dimmerbetrieb insbesondere auch bei einer Anschnittsteuerung möglich ist.

Die verfahrensbezogene Aufgabe wird erfindungsgemäß durch ein eingangs genanntes, gattungsgemäßes Verfahren gelöst, bei dem die Spannung am Halbleiterschalter, wenn dieser den Stromfluss zum Leuchtmittel sperrt (Sperrspannung), zur Verwendung als Regelgröße für die Lichtstromsteuerung aufbereitet wird, wobei aus diesem zu seiner Bewertung Spannungs-Zeit-Flächen (IST-Wert) abgeleitet werden, und bei dem das aufbereitete Sperrspannungssignal mit einem den abzugebenden Lichtstrom wiedergebenden Vergleichswert (SOLL-Wert) zur Bestimmung des Schaltzeitpunktes verglichen wird, und zwar bei einer Konzeption des Dimmers als Phasenanschnittdimmer bevor ein Zündimpuls zum Schalten des Halbleiterschalters generiert wird, und bei einer Konzeption des Dimmers als Phasenabschnittdimmer bevor der Abschaltzeitpunkt der direkt folgenden Halbwelle bestimmt wird, und wobei die Spannungs-Zeit-Flächen-Bestimmung regelmäßig zurückgesetzt wird.

Die vorrichtungsbezogene Aufgabe wird betreffend einen Phasenanschnittdimmer durch eine eingangs genannte gattungsgemäße Schaltungsanordnung mit den Merkmalen des Anspruchs 5 gelöst.

Die vorrichtungsbezogene Aufgabe wird alternativ in Bezug auf einen Phasenabschnittdimmer durch eine eingangs genannte, gattungsgemäße Schaltungsanordnung mit den Merkmalen des Anspruchs 7 gelöst.

Bei diesem Verfahren - gleiches gilt für die Schaltungsanordnung - wird im Unterschied zu den Verfahren nach dem Stand der Technik eine Regelgröße verwendet, die erfasst, aufbereitet und bewertet wird, bevor ein Zündimpuls zum Schalten des Halbleiterschalters generiert bzw. der Abschaltzeitpunkt der direkt folgenden Halbwelle bestimmt wird. Aus diesem Grunde können auch solche Korrekturen in die Zündzeitpunktbestimmung eingebracht werden, die die Folge längerperiodischer Störungen sind, d.h. Störungen, die mit geringer Frequenz und damit unterhalb der Netzfrequenz stattfinden. Hierzu macht man sich die vorbekannte Anschnitt- bzw. Abschnittsteuerung zunutze, die impliziert, dass bestimmte Abschnitte einer Sinushalbwelle das Leuchtmittel nicht beaufschlagen. Genutzt wird als Regelgröße die am Halbleiterschalter in seinem nicht durchgeschalteten Zustand anliegende Sperrspannung. Je nach Konzeption des Dimmers als Phasenanschnittdimmer oder Phasenabschnittdimmer wird durch den Zündimpuls der Halbleiterschalter entweder zur Last durchgeschaltet (Phasenanschnittdimmer) oder von dieser getrennt (Phasenabschnittdimmer). Bei einem Phasenanschnittdimmer wird der Zeitpunkt des Zündimpulses bestimmt, bevor der Halbleiterschalter durchgeschaltet ist, und zwar in einem Zeitpunkt, in dem das oder die Leuchtmittel nicht bestromt sind. Das Verfahren ist also prädiktiv arbeitend ausgelegt.

Dem beschriebenen Verfahren liegt die Erkenntnis zugrunde, dass die effektive Netzspannung als konstant angesehen werden kann, zumindest soweit dieses von Relevanz für das beschriebene Verfahren sowie für die beschriebene Schaltungsanordnung ist. Dieses bedeutet nicht, dass die effektive Netzspannung im physikalischen Sinne konstant ist, sondern dass Schwankungen derselben allenfalls zu Lichtstromschwankungen führt, welche aufgrund der Wahrnehmung und Bewertung im menschlichen Sehsinn nicht als Flickern wahrgenommen werden. Es ist nicht auszuschließen, dass bei Netzspannungsschwankungen, beispielsweise einer Netzspannungserhöhung eine gewisse länger andauernde Lichtstromerhöhung bewirkt wird. Derartige Änderungen werden nutzerseitig nicht oder zumindest nicht störend wahrgenommen, da diese über die gesamte Zeitdauer des Störsignales wiederum konstant bleibt.

Aus demselben Grunde wurde festgestellt, dass sich die Spannungs-Zeit-Flächen der einzelnen Halbwellen zueinander nur untergeordnet ändern und daher gleichermaßen als konstant für die Zwecke dieses Verfahrens angesehen werden können. Dieses ermöglicht, dass Spannungs-Zeit-Flächen zur Bewertung der Sperrspannung verwendet werden können, um ein Flickern zu vermeiden oder zumindest so weit zu reduzieren, dass dieses nicht wahrnehmbar ist. Zur Signalaufbereitung werden die Spannungs-Zeit-Flächen beispielsweise quadriert.

Die vorgenannte Erkenntnis beruht auf den Überlegungen, dass die erfasste Sperrspannung am Halbleiterschalter das Abbild der Helligkeit des Leuchtmittels als Funktion der Spannung an der Last ist. Diese Voraussetzung basiert auf der weiteren Erkenntnis, dass die Netzspannung auch während der Überlagerung von Störfrequenzen, beispielsweise durch Rundsteuersignale, als konstant angesehen werden kann, wie dieses nachfolgend kurz erläutert ist:

Ausgehend von einer konstanten Netzspannung und einem konstanten Störsignal kann nach Formel 1 die Aussage gemacht werden dass die effektive Netzspannung während der Störung auch konstant ist.

$$U_{eff(Netz+Rundsteuer)} = \sqrt{U_{eff(Netz)}^2 + U_{eff(Rundsteuer)}^2} \qquad (1)$$

Die gesamt Netzspannung teilt sich nach Formel 2 auf die Last und die Sperrspannung über dem Dimmer auf.

$$U_{eff(Netz+Rundsteuer)} = \sqrt{U_{eff(Last)}^2 + U_{eff(Sperr)}^2} \qquad (2)$$

Die Leistung eines Leuchtmittels und damit der Lichtstrom ergibt sich nach Formel 3.

$$P_{Last} = \frac{U_{eff(Last)}^2}{R} \qquad\qquad (3)$$

Daraus ergibt sich das durch Konstanthalten der effektiven Sperrspannung auch der Lichtstrom konstant gehalten werden kann.

Zum Erhalten einer hinreichend auswertbaren Regelgröße wird die am Halbleiterschalter anliegende Sperrspannung in einem ersten Schritt aufbereitet. Dieses kann beispielsweise im Wege einer Signalverstärkung oder Potenzierung erfolgen. Gemäß einem bevorzugten Ausführungsbeispiel ist vorgesehen, die Sperrspannung zu quadrieren, bevor die Spannungs-Zeit-Flächen-Bestimmung vorgenommen wird. Letzteres erfolgt typischerweise durch eine Integration mittels eines Integrators. Bei einer solchen Ausgestaltung des Verfahrens wird ein Komparator mit einem Spannungsquadrat-Zeit-Flächen-Signal beaufschlagt. Erst das Aufbereiten des Sperrspannungssignals, beispielsweise durch Quadrieren gestattet es, eine Bewertung des erfassten Sperrspannungssignals in einem Zusammenhang mit dem Lichtstrom zu sehen und eine entsprechende Verschiebung des Zündwinkels durch Verwenden eines einfachen Komparatorgliedes vornehmen zu können. Auch für eine Verwendung anderer Bewertungsglieder ist zum Erreichen des gewünschten Zweckes, ein Flickern infolge von die Netzspannung überlagernden Störsignalen herabzusetzen oder zumindest zu reduzieren, die beschriebene Signalaufbereitung notwendig. Das Bewertungsglied, beispielsweise der Komparator ist über einen anderen Eingang mit einem den gewünschte Lichtstrom wiedergebenden SOLL-Wert beaufschlagt. Da sich die Spannungs-Zeit-Fläche bei Überlagerung durch eine Störfrequenz ändert, durch den SOLL-Wert jedoch ein bestimmter, von der Leuchte abzugebender Lichtstrom vorgegeben ist, definiert der SOLL-Wert einen Schwellwert, der diejenige Spannungs-Zeit-Fläche darstellt, die dem gewünschten Lichtstrom des Leuchtmittels entspricht. Von dem Komparator wird im Falle eines Phasenanschnittdimmers dann ein Zündimpuls zum Durchschalten des Halbleiterschalters generiert, wenn die durch den SOLL-Wert eingestellte Schwelle durch den IST-Wert - dem Spannungsquadrat-Zeit-Flächen-Signal - überschritten wird. Da die Integration der zur Verwendung als Regelgröße aufbereiteten, beispielsweise quadrierten Sperrspannung bei nicht durchgeschaltetem Halbleiterschalter fortlaufend erfolgt, bis der Schwellwert überschritten wird, erfolgt hierdurch automatisch eine Kompensation von die Netzspannung überlagernden Störfrequenzen.

Um die Integration bzw. den die Integration durchführenden Integrator nach jeder Halbwelle zurücksetzen zu können, erfolgt zweckmäßiger Weise eine Nulldurchgangserkennung der Sperrspannung. Bei jedem Nulldurchgang der Sperrspannung wird der Integrator zurückgesetzt, so dass mit Beginn der anschließenden Halbwelle die Integration der Spannungs-Zeit-Fläche bei "Null" beginnen kann. Durch das regelmäßige Zurücksetzen des Erfassungsgliedes bzw. seines Integrators können längerperiodische Störanteile nicht in Erscheinung treten.

Nachfolgend ist die Erfindung anhand eines Ausführungsbeispieles unter Bezugnahme auf die beigefügten Figuren beschrieben. Es zeigen:

Fig. 1:    ein schematisiertes Blockschaltbild eines Phasenanschnittdimmers,

Fig. 2:    Diagramme, darstellend die Signalerfassung und -bewertung und

Fig. 3:    ein schematisiertes Blockschaltbild eines Phasenabschnittdimmers.

Ein Phasenanschnittdimmer 1 verfügt über einen in dem Blockschaltbild nicht näher dargestellten Halbleiterschalter, beispielsweise einen Triac. Der Phasenanschnittdimmer 1 ist mit einem in der Figur nicht dargestellen Leuchtmittel in Reihe geschaltet. Bei dem Phasenanschnittdimmer 1 handelt es sich um einen Zweidrahtdimmer. Angeschlossen an den Halbleiterschalter zum Erfassen seiner Sperrspannung ist ein Erfassungsglied 2. Das Erfassungsglied 2 verfügt über ein Quadrierglied 3, welches eingangsseitig mit der Sperrspannung des Halbleiterschalters beaufschlagt ist. Das Quadrierglied 3 dient zum Quadrieren der Sperrspannung und beaufschlagt einen Integrator 4. Der Integrator 4 dient zum Bestimmen der Sperrspannungsquadrat-Zeit-Flächen, welches Sperrspannungsquadrat-Zeit-Flächen-Signal als IST-Wert an einem ersten Eingang 5 eines Komparators 6 anliegt. An einem zweiten Eingang 7 des Komparators 6 liegt ein, bei dem dargestellten Ausführungsbeispiel durch ein Potenziometer bereitgestellter SOLL-Wert an. Der SOLL-Wert ist eine den benutzerseitig gewünschten Lichtstrom des Leuchtmittels wiedergebende Größe.

Neben dem Erfassungsglied 2 verfügt der Phasenanschnittdimmer 1 über ein Nulldurchgangs-Erkennungsglied 8. Das Nulldurchgangs-Erkennungsglied 8 ist eingangsseitig parallel zu dem Quadrierglied 3 an die Sperrspannung des Halbleiterschalters angeschlossen. Mit seinem Ausgang ist das Nulldurchgangs-Erkennungsglied 8 an den Rücksetz-Eingang 9 des Integrators 4 angeschlossen. Das Nulldurchgangs-Erkennungsglied 8 übermittelt einen Rücksetzimpuls an den Integrator 4, wenn ein Nulldurchgang der sinusförmigen Sperrspannung erkannt worden ist.

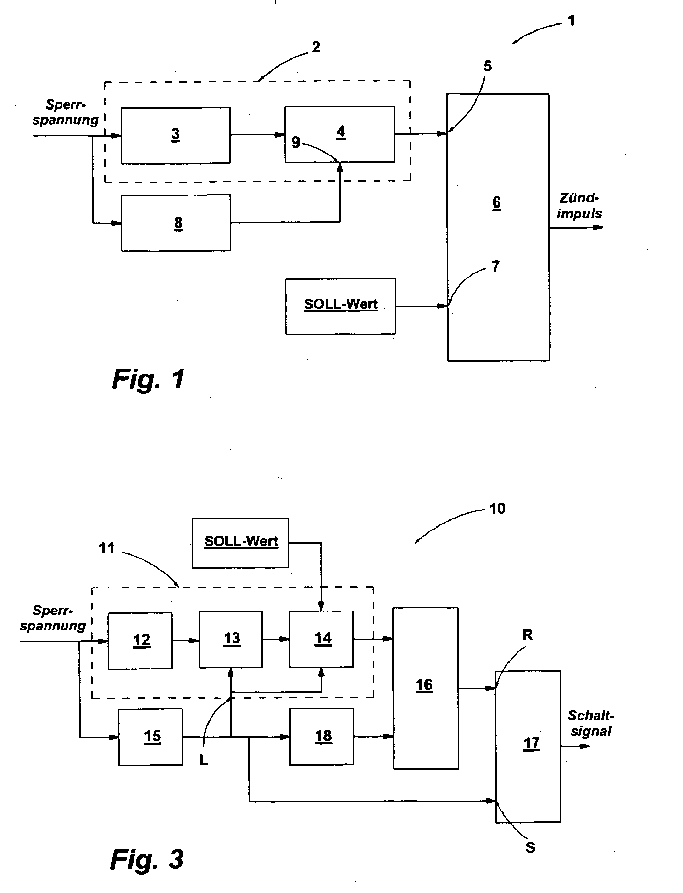

Bei einem Betrieb des Phasenanschnittdimmers 1 wird die Sperrspannung beobachtet und mit dem Erfassungsglied 2 hinsichtlich der innerhalb der Halbwellenabschnitte enthaltenen Energie bewertet. Zu diesem Zweck erfolgt die Integration des Spannungsquadrates mit dem Integrator 4 zur Aufbereitung des Sperrspannungssignals, da ohne eine solche Aufbereitung der gewünschte Zweck einer Unterdrückung eines Flickerns infolge von Netzspannungsüberlagerungen nicht mit einfachen Mitteln möglich ist. Die Integration der Sperrspannung bzw. des Sperrspannungsquadrates erfolgt beginnend mit einem Nulldurchgang. Die fortlaufenden Integrationsergebnisse beaufschlagen den Eingang 5 des Komparators 6. Durch den an dem zweiten Eingang 7 des Komparators 6 anliegenden SOLL-Wert verfügt der Komparator 6 über einen, den gewünschten Lichtstrom wiedergebenden Schwellwert. Ist die Integration der Sperrspannung so weit fortgeschritten, dass der Schwellwert überschritten wird, generiert der Komparator 6 einen Zündimpuls zum Durchschalten des beispielsweise als Triac ausgebildeten Halbleiterschalters. Ist der Halbleiterschalter durchgeschaltet, ist das Leuchtmittel bestromt. Somit dient bei diesem Verfahren und ebenso bei der in Figur 1 gezeigten Schaltungsanordnung die Sperrspannung als Regelgröße zum beeinflussen des durch den SOLL-Wert voreingestellten Zündwinkels. Durch die Aufbereitung des abgegriffenen Sperrspannungssignals wird dieses zunächst als verwertbare Regelgröße aufbereitet. Damit werden bei diesem Verfahren auch die, die Netzspannung überlagernden Störfrequenzen automatisch als Regelgröße verwendet. Ist die Sperrspannung durch eine Störüberlagerung größer, ist ebenfalls die Sperrspannungsquadrat-Zeit-Fläche größer mit der Folge, dass der durch den SOLL-Wert vorgegebene Schwellwert früher überschritten wird. Folglich wird der Zündimpuls früher generiert, mithin die Halbwelle früher angeschnitten. Damit ist die, die Netzspannung überlagernde Störfrequenz unmittelbar verantwortlich für eine Verschiebung des Anschnittszeitpunktes bzw. einer Änderung der Verzögerungszeit. Die der Verstärkung des Sperrspannungssignals dienende Aufbereitung ist dergestalt eingerichtet, dass das damit generierte IST-Signal eine durch den Komparator gegenüber dem gewünschten Lichtstrom wiedergegebenen SOLL-Wert erkennbar unterscheidbare Größe aufweist, wenn eine Störsignaländerung vorliegt. Entsprechend wird umgekehrt bei einer zu geringen Sperrspannung der Schwellwert erst verzögert überschritten und dementsprechend der Zündimpuls entsprechend zeitlich zu einem späteren Zeitpunkt generiert, mithin die Halbwelle zu einem späteren Zeitpunkt angeschnitten. Bei diesem Verfahren erfolgt somit eine Energiebetrachtung der Halbwelle in einem Zeitpunkt, bevor der Halbleiterschalter durchgeschaltet ist.

Parallel zu der Erfassung, Aufbereitung und Auswertung der Sperrspannung wird der Integrator 4 durch den von dem Nulldurchgangserkennungsglied 8 generierten Rücksetzimpuls bei jedem Nulldurchgang der sinusförmigen Sperrspannung zurückgesetzt. Damit wird bei dem Phasenanschnittdimmer 1 in Abhängigkeit von der Energie jeder Halbwelle die Verzögerungszeit an die aktuelle Energie einer Halbwelle angepasst und hierdurch Flickererscheinungen vermieden oder zumindest auf ein Maß reduziert, dass diese für einen Benutzer nicht wahrnehmbar sind.

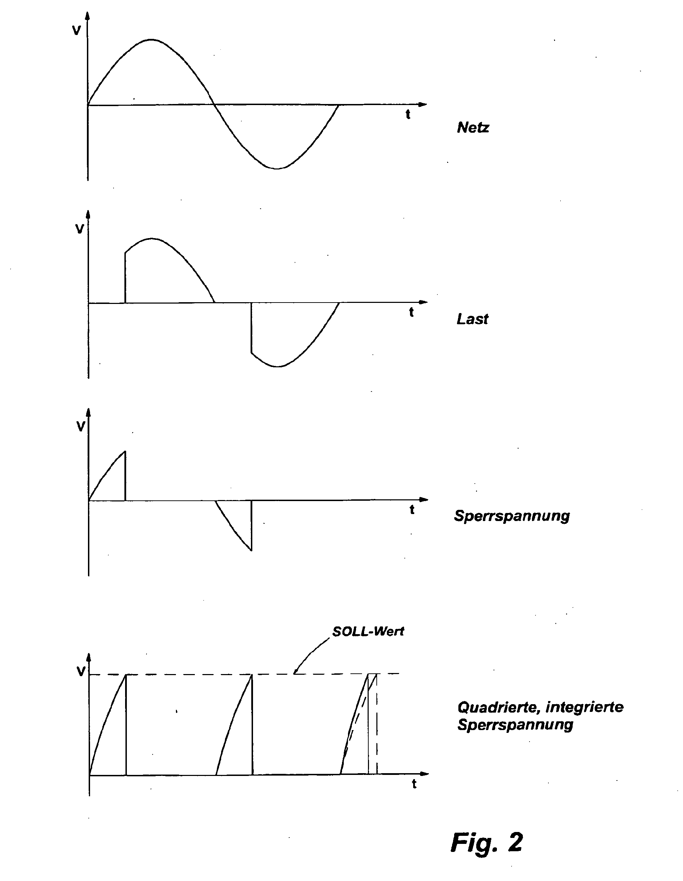

Figur 2 zeigt in Form von Diagrammen ausgehend von der Netzspannung (oberstes Diagramm) die Signalerfassung und die halbwellenbezogene Auswertung bzw. Bewertung der am Halbleiterschalter erfassten Sperrspannung. Das zu unterst in Figur 2 gezeigte Diagramm gibt schematisiert die quadrierte Sperrspannung und die Flächenintegration wider. Im Wege eines Beispiels ist der erfasste und durch Quadrieren und Integrieren aufbereitete IST-Wert des dritten dargestellten Halbwellenabschnittes durch eine Störung überlagert. Ohne die vorgeschriebene Korrektur würde somit das am Dimmer angeschlossene Leuchtmittel bezogen auf die vorangegangenen Halbwellen zu wenig Energie erhalten, mithin in seinem Lichtstrom abnehmen. Aus diesem Grunde wird der Zündimpuls generiert, sobald durch die fortlaufende Flächenintegration der SOLL-Wert überschritten wird. Bei der beispielhaft dargestellten störüberlagerten Halbwelle führt dieses zur Generierung eines Zündimpulses zu einem früheren Zeitpunkt, verglichen mit den vorangegangenen Halbwellen, mit der Folge, dass die Halbwelle entsprechend früher angeschnitten wird. Erkennbar ist dieses daran, dass die Verzögerungszeit (Beginn des jeweiligen Signals bis zum Erreichen des SOLL-Wertes) bei dieser Halbwelle kürzer ist als bei den beiden vorangegangenen Halbwellen. Zum Vergleich ist das vorangegangene ungestörte Signal gestrichelt dargestellt.

Figur 3 zeigt ein Blockschaltbild für einen Phasenabschnittdimmer 10. Der Phasenabschnittdimmer 10 ist ebenfalls nach den grundsätzlichen, zu dem Phasenanschnittdimmer der Figur 1 genannten Prinzipien aufgebaut und arbeitet dementsprechend. Der Phasenabschnittdimmer 10 umfasst ein Erfassungs- und Bewertungsglied 11, dessen Eingang an die Sperrspannung des Halbleiterschalters angeschlossen ist. Das Erfassungs- und Bewertungsglied 11 umfasst ein Quadrierglied 12, einen Intergrator 13 sowie ein Stellwertberechnungsglied 14. Das Quadrierglied 12 und der Integrator 13 dienen der Signalaufbereitung. Das Stellwertberechnungsglied 14, das beispielsweise durch einen Mikrokontroller realisiert sein kann, dient zur Bewertung und zum Durchführen des Vergleiches mit einem SOLL-Wert. Aus diesem Grunde liegt an einem Eingang des Stellwertberechnungsgliedes 14 ein den gewünschten Lichtstrom wiedergebender SOLL-Wert an.

Getaktet wird das Erfassungs- und Bewertungsglied 11 durch ein Nulldurchgang-Erkennungsglied 15, dessen Eingang ebenfalls an die Sperrspannung des Halbleiterschalters angeschlossen ist und dessen Ausgang den Integrator 13 sowie das Stellwertberechnungsglied 14 beaufschlagt. Der Ausgang des Stellwertberechnungsgliedes 14, welches gleichzeitig den Ausgang des Erfassungs- und Bewertungsgliedes 11 darstellt, beaufschlagt einen Komparator 16. An dem anderen Eingang des Komparators 16 liegt das Signal eines Sägezahngenerators 18 an, dessen Eingang an den Ausgang des Nulldurchgang-Erkennungsgliedes 15 angeschlossen ist. Der Ausgang des Komparators 16 ist an den einen Rücksetzeingang R eines Flip-Flop 17 angeschlossen. Der andere Eingang - der Setzeingang S - des Flip-Flop 17 ist durch das Signal des Nulldurchgangs-Erkennungsgliedes 15 beaufschlagt.

Der Phasenabschnittdimmer 10 arbeitet wie folgt:

Das quadrierte und integrierte Sperrspannungssignal wird zum Zeitpunkt des Netzspannungsnulldurchganges mit dem SOLL-Wert verglichen. Aus dem Ergebnis des Vergleiches wird ein Stellwert gebildet, der dem Komparatoreingang zugeführt wird. Am anderen Eingang des Komparators 16 liegt ein Sägezahnsignal an, dass mit den Netzspannungsnulldurchgängen zurückgesetzt wird. Schneidet der Sägezahn den Stellwert, wird der Halbleiterschalter (Halbleiterendstufe) ausgeschaltet, der mit dem Netzspannungsnulldurchgang eingeschaltet worden ist. Das quadrierte und integrierte Sperrspannungssignal und dessen gegebenenfalls vorhandene Abweichung zum SOLL-Wert werden nach dem Netzspannungsnulldurchgang zurückgesetzt, nachdem daraus der Stellwert für die direkt nachfolgende Halbwelle ermittelt worden ist.

**Bezugszeichenliste**

1    Phasenanschnittdimmer
2    Erfassungsglied
3    Quadrierglied
4    Integrator
5    Eingang
6    Komparator
7    Eingang
8    Nulldurchgang-Erkennungsglied
9    Rücksetzeingang
10   Phasenabschnittdimmer
11   Erfassungs- und Bewertungsglied
12   Quadrierglied
13   Integrator
14   Stellwertberechnungsglied
15   Nulldurchgangs-Erkennungsglied
16   Komparator
17   Flip-Flop
18   Sägezahngenerator
L    Rücksetzeingang
R    Rücksetzeingang
S    Setzeingang

**Patentansprüche**

1.  Verfahren zur Steuerung eines bezüglich seines abzugebenden Lichtstroms einstellbaren, an einen einen Halbleiterschalter aufweisenden Dimmer (1, 10) angeschlossenen Leuchtmittels, **dadurch gekennzeichnet, dass** die Spannung am Halbleiterschalter, wenn dieser den Stromfluss zum Leuchtmittel sperrt (Sperrspannung), zur Verwendung als Regelgröße für die Lichtstromsteuerung aufbereitet wird, wobei aus diesem zu seiner Bewertung Spannungs-Zeit-Flächen (IST-Wert) abgeleitet werden, und dass das aufbereitete Sperrspannungssignals mit einem den abzugebenden Lichtstrom wiedergebenden Vergleichswert (SOLL-Wert) zur Bestimmung des Schaltzeitpunktes verglichen wird, und zwar bei einer Konzeption des Dimmers als Phasenanschnittdimmer (1) bevor ein Zündimpuls zum Schalten des Halbleiterschalters generiert wird, und bei einer Konzeption des Dimmers als Phasenabschnittdimmer (10) bevor der Abschaltzeitpunkt der direkt folgenden Halbwelle bestimmt wird, und dass die Spannungs-Zeit-Flächen-Bestimmung regelmäßig zurückgesetzt wird.

2.  Verfahren nach Anspruch 1, **dadurch gekennzeichnet, dass** zur Sperrspannungssignalaufbereitung die erfasste Sperrspannung geeignet potenziert, beispielsweise quadriert wird.

3.  Verfahren nach Anspruch 1 oder 2, **dadurch gekennzeichnet, dass** die Spannung-Zeit-Flächen-Bestimmung im Wege einer Integration durchgeführt wird.

**4.** Verfahren nach einem der Ansprüche 1 bis 3, **dadurch gekennzeichnet, dass** die Spannungs-Zeit-Flächen-Bestimmung bei Erfassen eines Nulldurchgangs der Sperrspannung zurückgesetzt wird.

**5.** Schaltungsanordnung zum Steuern des Lichtstroms eines an einen einen Halbleiterschalter aufweisenden Dimmer (1) angeschlossenen Leuchtmittels, **dadurch gekennzeichnet, dass** die Schaltungsanordnung ein an die Sperrspannung des Halbleiterschalters angeschlossenes Erfassungsglied (2) zum Bestimmen von Spannungs-Zeit-Flächen der erfassten Sperrspannung und das Erfassungsglied (2) wenigstens ein Signalaufbereitungsglied (3) zum Aufbereiten der erfassten Sperrspannung zur Verwendung des aufbereiteten Signals als Regelgröße für die Lichtstromsteuerung und einen diesem nachgeschalteten Integrator (4) aufweist, dessen Ausgangssignal einen ersten Eingang (5) eines Komparators (6) beaufschlagt, und wobei an einem zweiten Eingang (7) des Komparators (6) ein SOLL-Wert für den Steuerwinkel zum Generieren ei-'nes Zündimpulses anliegt und der Komparator (6) zum Zünden des Halbleiterschalters an diesen angeschlossen ist, welches Erfassungsglied (2) über einen Rücksetzeingang (9) zum Zurücksetzten der Spannungs-Zeit-Flächen-Bestimmung verfügt.

**6.** Schaltungsanordnung nach Anspruch 4 oder 5, **dadurch gekennzeichnet, dass** die Schaltungsanordnung über ein Nulldurchgangs-Erkennungsglied (8) verfügt, welches eingangsseitig durch die Sperrspannung des Halbleiterschalters beaufschlagt ist und dessen Ausgang an einen Rücksetzeingang (9) des Integrators (4) angeschlossen ist.

**7.** Schaltungsanordnung zum Steuern des Lichtstroms eines an einen einen Halbleiterschalter aufweisenden Dimmer (10) angeschlossenen Leuchtmittels, **dadurch gekennzeichnet, dass** die Schaltungsanordnung ein an die Sperrspannung des Halbleiterschalters angeschlossenes Erfassungs- und Bewertungsglied (11) zum Bestimmen von Spannungs-Zeit-Flächen der erfassten Sperrspannung und zum Bewerten der erfassten Sperrspannung im Wege eines SOLL-Wertvergleiches aufweist und das Erfassungs- und Bewertungsglied (11) wenigstens ein Signalaufbereitungsglied (12) zum Aufbereiten der erfassten Sperrspannung zur Verwendung des aufbereiteten Signals als Regelgröße für die Lichtstromsteuerung und einen diesem nachgeschalteten Integrator (13) umfasst, wobei das Ausgangssignal des Erfassungs- und Bewertungsgliedes (11) einen Eingang eines Komparators (16) beaufschlagt und an einem zweiten Eingang des Komparators (16) das Signal eines Sägezahngenerators (18) anliegt und das Ausgangssignal des Komparators 16 einen Eingang (R) eines Flip-Flop (17) beaufschlagt, dessen anderer Eingang (S) an den Ausgang eines Nulldurchgangs-Erkennungsgliedes (15) angeschlossen ist, welches Erfassungs- und Bewertungsglied (11) über einen Rücksetzeingang (L) zum Zurücksetzen der Erfassung und Bewertung verfügt.

**Claims**

**1.** Process for controlling an illuminant which is adjustable with respect to its luminous flux to be output and is connected to a dimmer (1, 10) that has a semiconductor switch, **characterised in that** when the semiconductor switch blocks the luminous flux to the illuminant (reverse voltage) the voltage at the semiconductor is conditioned for implementation as a control variable for controlling the luminous flux, with voltage-time areas (actual value) being conducted away from this for evaluating the same; and that, in order to identify the switching instant, the conditioned reverse voltage signal is compared with a comparative value (nominal value) reflecting the luminous flux to be output and, namely, by the dimmer being conceived as a phase control dimmer (1) before a firing pulse for actuating the semiconductor switch is generated, and by the dimmer being conceived as a reverse phase control dimmer (10) before the switching-off instant of the immediately following half-wave is determined, and that the identification of the voltage / time areas is regularly reset.

**2.** Process in accordance with Claim 1, **characterised in that** the detected reverse voltage is appropriately raised to a higher power, for instance squared, for the purpose of conditioning the reverse voltage signal.

**3.** Process in accordance with Claim 1 or Claim 2, **characterised in that** the identification of the voltage-time areas is accomplished by means of integration.

**4.** Process in accordance with any of Claims 1 to 3, **characterised in that** the identification of the voltage-time areas is reset upon a zero crossing of the reverse voltage being detected.

**5.** Circuit arrangement for the purpose of controlling the luminous flux of an illuminant connected to a dimmer (1) having a semiconductor switch, **characterised in that** the circuit arrangement has a detection member (2) connected to the reverse voltage of the semiconductor switch for the purpose of identifying voltage-time areas of the detected reverse voltage, and the detection member (2) having at least one signal conditioning member (3) for conditioning the detected reverse voltage in order to implement the conditioned signal as a control variable for controlling the luminous flux and an integrator (4) downstream of the same whose output signal impinges on a first input (5) of a comparator (6); and with a nominal value for the control angle being applied to a second input (7) of the comparator (6) for the purpose of generating a firing pulse, and with the comparator (6) connected to the same for the purpose of firing the semiconductor switch, the detection member (2) having a reset input (9) for the purpose of resetting the identification of the voltage-time areas.

6. Circuit arrangement in accordance with Claim 4 or Claim 5, **characterised in that** the circuit arrangement has a zero crossing detection member (8) on which the reverse voltage of the semiconductor switch impinges on the input side, and whose output is connected to a reset input (9) of the integrator (4).

7. Circuit arrangement for the purpose of controlling the luminous flux of an illuminant connected to a dimmer (10) having a semiconductor switch, **characterised in that** the circuit arrangement has a detection and evaluation member (11) connected to the reverse voltage of the semiconductor switch so as to identify voltage-time areas of the detected reverse voltage and for evaluating the detected reverse voltage by means of a comparison of the nominal value, and with the detection and evaluation member (11) encompassing at least one signal conditioning member (12) for the purpose of conditioning the detected reverse voltage so as to implement the conditioned signal as a control variable for controlling the luminous flux, and an integrator (13) downstream of the same; with the output signal of the detection and evaluation member (11) impinging on an input of the comparator (16) and with the signal of a saw-tooth generator (18) applied to a second input of the comparator (16) and with the output signal of the comparator (16) impinging on an input (R) of a flip-flop (17) whose other input (S) is connected to the output of a zero crossing detection member (15), the detection and evaluation member (11) having a reset input (L) for the purpose of resetting the detection and evaluation.

**Revendications**

1. Procédé de commande d'une ampoule raccordée à un variateur (1, 10) comportant un commutateur à semi-conducteur réglable en fonction du flux lumineux à émettre, **caractérisé par le fait que** la tension au commutateur à semi-conducteur, quand celui-ci bloque le flux de courant vers l'ampoule (tension de blocage), est traitée pour utilisation comme grandeur réglée pour la commande du flux lumineux ; des surfaces tension-temps (valeur réelle) sont dérivées du flux de courant pour son évaluation, et le signal de tension de blocage traité est comparé, pour la détermination de l'instant de commutation, avec une valeur de comparaison (valeur de consigne) indiquant le flux lumineux à émettre (si le variateur est conçu comme variateur à coupure de phase montante (1) : avant qu'une impulsion d'allumage ne soit générée pour l'activation du commutateur à semi-conducteur ; si le variateur est conçu comme variateur à coupure de phase descendante (10) : avant que l'instant de désactivation de la demi-onde immédiatement consécutive ne soit déterminé), la détermination des surfaces tension-temps étant régulièrement réinitialisée.

2. Procédé selon la revendication 1, **caractérisé par le fait que**, pour le traitement du signal de tension de blocage, la tension de blocage saisie est élevée à une puissance adaptée, par exemple au carré.

3. Procédé selon la revendication 1 ou 2, **caractérisé par le fait que** la détermination des surfaces tension-temps est effectuée dans le cadre d'une intégration.

4. Procédé selon une des revendications 1 à 3, **caractérisé par le fait que** la détermination des surfaces tension-temps est réinitialisée lors de la saisie d'un passage par zéro de la tension de blocage.

5. Disposition de circuit pour la commande du flux lumineux d'une ampoule raccordée à un variateur (1) comportant un commutateur à semi-conducteur,
**caractérisée par le fait que** la disposition de circuit présente un organe de saisie (2) raccordé à la tension de blocage du commutateur à semi-conducteur pour la détermination des surfaces tension-temps de la tension de blocage saisie et que l'organe de saisie (2) présente au moins un organe de traitement de signal (3) pour traiter la tension de blocage saisie pour l'utilisation du signal traité comme grandeur réglée pour la commande du flux lumineux ainsi qu'un intégrateur (4) monté en aval par rapport à celui-ci et dont le signal de sortie alimente une première entrée (5) d'un comparateur (6) ; une valeur de consigne est appliquée à la deuxième entrée (7) du comparateur (6) pour l'angle de commande afin de produire une impulsion d'allumage et le comparateur (6) destiné à l'allumage du commutateur à semi-conducteur est connecté à celui-ci ; l'organe de saisie (2) de celui-ci dispose d'une entrée de réinitialisation (9) pour réinitialiser la détermination des surfaces tension-temps.

6. Disposition de circuit selon la revendication 4 ou 5, **caractérisée par le fait que** la disposition de circuit comporte un organe de détection de passage par zéro (8) qui est alimenté du côté entrée par la tension de blocage du commutateur à semi-conducteur et dont la sortie est connectée à une entrée de réinitialisation (9) de l'intégrateur (4).

7. Disposition de circuit pour la commande du flux lumineux d'une ampoule raccordée à un variateur (10) comportant un commutateur à semi-conducteur, **caractérisée par le fait que** la disposition de circuit présente un organe de saisie et d'évaluation (11) raccordé à la tension de blocage du commutateur à semi-conducteur pour déterminer les surfaces tension-temps de la tension de blocage saisie et pour évaluer la tension de blocage saisie dans le cadre d'une comparaison avec la valeur de consigne et que l'organe de saisie et d'évaluation (11) comporte au moins un organe de traitement de signal (12) pour traiter la tension de blocage saisie afin d'utiliser le signal traité comme grandeur réglée pour la commande du flux lumineux ainsi qu'un intégrateur (13) monté en aval de celui-ci ; le signal de sortie de l'organe de saisie et d'évaluation (11) alimente une entrée d'un comparateur (16) ; le signal d'un générateur de dents de scie (18) est émis au niveau de la deuxième entrée du comparateur (16) et le signal de sortie du comparateur 16 alimente une entrée (R) d'un flip-flop (17) dont une autre entrée (S) est raccordée à la sortie d'un organe de détection de passage par zéro (15) dont l'organe de saisie et d'évaluation (11) dispose d'une entrée de réinitialisation (L) pour réinitialiser la saisie et l'évaluation.

Sperrspannung

| | |
|---|---|
| **3** | **4** |

**8**

**6**

**5**

**9**

**1**

**2**

Zündimpuls

**7**

SOLL-Wert

## Fig. 1

Sperrspannung

SOLL-Wert

**11**

**10**

| | | |
|---|---|---|
| **12** | **13** | **14** |

**15**

L

**18**

**16**

**17**

R

S

Schaltsignal

## Fig. 3

Netz

Last

Sperrspannung

SOLL-Wert

Quadrierte, integrierte
Sperrspannung

**Fig. 2**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4441733 A1
- DE 4406371 B4